# EUROPEAN PATENT SPECIFICATION

(11) **EP 0 664 265 B1**
(45) Date of publication and mention of the grant of the patent: **18.08.1999**
(21) Application number: 95500003.9
(22) Date of filing: 12.01.1995
(51) Int. Cl.: B65G 67/02

(54) **Automated installation for pallet loading and unloading on lorries, especially at automated warehouses**
Automatisierte Einrichtung zum Laden und Entladen von Paletten auf Lastkraftwagen, insbesondere in automatisierten Lagerhäusern
Installation automatisée pour charger et décharger des palettes sur des camions, en particulier dans des magasins automatisés

(30) Priority: 13.01.1994 ES 9400058
(43) Date of publication of application: 26.07.1995
(73) Proprietor: INPROPACK, S.L., E-28940 Fuenlabrada (Madrid) (ES)
(72) Inventor: Ortego Soria, Angel, E-28940 Fuenlabrada (Madrid) (ES)
(74) Representative: Perez Bonal, Bernardo

(56) References cited:
- EP-A- 0 472 439
- EP-A- 0 577 172
- DE-A- 3 151 402
- US-A- 4 289 442

## Description

### SUBJECT OF THE INVENTION

The invention which is the subject of this specification relates to an automatic installation fortransferring pallets from highly automated warehouses to lorries and *vice versa,* although this is not a determining condition, it being possible, for many reasons, for it to be installed in warehouses which enjoy little or no automation.

This installation is based on an automatic system for feeding pallets, In a continuous double line and up to the sides of the loading area of each one of the quays, including a joint front aligning terminal for successive pairs of pallets.

It is based on a telescopic crane which can be displaced over aligned frames and which carries a cradle with free retractable wheels and which includes corresponding blades or forks for handling the pallets in pairs at their bases.

It also incorporates a system for bringing the pallets together prior to joint introduction onto the platform of the lorry.

Finally, it incorporates a device for monitoring alignment of the box body of the lorry, by means of a laser, and which is, at the same time, a proximity detector for locating the position of the consecutive pallets during the automated loading and unloading process, said device also serving to determine the correct alignment and proximity of the pallets to the walls of the lorry.

More specifically, the invention is an automatic installation for loading pallets onto lorries and unloading them from lorries, especially in automatic warehouses, which comprises:
an automated feed system for delivering pallets to and retrieving pallets from a loading quay or a series of loading quays, said automated feed system being arranged on the or each loading quay in two parallel rows, one on either side of an inner extension of the plane of the sides of a lorry to be loaded or unloaded;
respective frame means mounted on the or each quay and aligned in the same direction as the loading platform of said lorry to be loaded or unloaded, said frame means incorporating a telescopic crane provided with a cradle for loading and unloading the pallets, said cradle including two rear support wheels;
a wheel deployment/retraction device operable to lower said rear support wheels when the cradle with the first row of pallets has been introduced inside the box body of the lorry;
a hydraulic or pneumatic sensor incorporated in the cradle for detecting obstacles and the presence of a slope, and
a laser checking device for determining the perpendicular and height alignment of the platform of the lorry with respect to the quay and for determining the correct alignment and proximity of said pallets to the walls of the lorry during displacement of the telescopic crane inside the lorry.

### BACKGROUND OF THE INVENTION

Modern technology permits virtually total automation of warehouses. Since these are configured dynamically, they incorporate not only a high degree of rationalisation of product distribution and accurate and rigorous knowledge of the status of the warehouse, which is instantaneously updated, but also the access areas for loading and unloading are automated as a function of the alignment of the stands between rails *via* which goods-transfer cranes run, either by means of multiple access rails or incorporating one crane per rail and a parallel double line of stands, as described in DE-A-3 151 402.

These warehouses usually incorporate preparation zones upstream of the actual warehouse in which one of the possible and customary operations is palleting the goods received, this zone being between the actual warehouse and the production zone.

Another of the zones common to this type of warehouse is the zone for transferring and preparing the load for shipment, various guiding procedures being known, being based on continuous wire for trolleys, conveyor belts, rollers, *etc.*

All these procedures end at the actual shipping zone where, ideally, the goods are arranged according to shipment destinations, said goods already being on the actual loading quays.

The actual proposer of the present invention is proprietor of the following patents which are linked to this broad topic of warehouse automation: P8600455, "Programmable trolley for processing orders"; P9100230, "Bailing machine"; and also Utility Model No. U930109, "Palleted load baler".

This experience over a number of years and normal market practice leads to the conclusion that, although automation has progressed in leaps and bounds in recent years in all warehouse zones, at the loading and unloading points there has barely been further progress than the levelling platforms at the quay terminal for adapting to the different height of the level of the loading platform of the lorries.

The reason for this lack of technology in this zone of the quays is due to the inherent problem in the differing sizes of the lorries, the different state of preservation of their platforms and the actual arrangement of the lorry with respect to the quay, the latter depending on the more or less accurate manoeuvring of the driver.

All these circumstances give rise to accidents involving the remote-controlled small trolleys, such as collisions against the sides, turning over, *etc.,* whilst self-guided trolleys cannot even be introduced onto the platform.

Moreover, the presence of cranes has served only to offer substantial support to this loading and unloading operation, said cranes not being used for the desired automatic loading and unloading operations.

### DESCRIPTION OF THE INVENTION

The invention is based on a quay-type loading terminal, which may be wire-guided or belt-guided or guided by rollers, provided that the goods which are to be shipped, duly stacked on pallets, are available on each quay in parallel alignment and in a double row, on either side of an inner extension of the plane of the sides of the lorry.

In a preferred embodiment, the invention is based on a telescopic crane suspended from a consecutive series of frames mounted on the quay. The crane is arranged to be aligned in the same direction as the loading platform of the lorry to enable the telescopic device of the crane to reach the furthest point of the box body of the lorry.

The crane incorporates a cradle and a telescopic device and, at its outermost end, a conventional lifting and lowering system for vertical displacement of the forks for handling the pallets. The forks may be arranged in pairs to facilitate the loading of pallets onto the lorry platform in pairs stacked side-by-side.

In addition, a wheel deployment/retraction device lowers the support wheels, which are disposed behind the forks and which can freely rotate. This device comes into operation once the cradle has been introduced into the box body of the lorry together with the first two front-aligned pallets so that, as of that moment, the telescopic mechanism of the crane can come into operation in order to move the goods, which are already supported on the deployed wheels, as far as possible towards the forward end of the box body.

To this end, the shipping means, be these belts, rollers or other means. transport the consecutive aligned pallets coming from the opposed parallel feeding lines to a common collection point located precisely in front of the platform of the lorry to be loaded. Here, the pallets are positioned side-by-side in closely arranged pairs, the separation between them varying by only a few centimetres.

Before carrying out a loading operation, the telescopic system of the crane is extended and, using a laser checking device, alignment of the lorry and, therefore, of its platform, is checked with respect to the edge of the quay, as well as the height of this platform with respect to the quay surface.

The loading operation is then initiated in the direction indicated and, whenever two aligned pallets are set down, the extendable telescopic arms operate until they reach the limit of travel and come into contact with the last row of pallets set down, carrying out this operation as many times as is necessary to complete loading of the lorry.

The laser checking device also determines the correct alignment and proximity of the pallets to the walls of the lorry.

To this end, and in order to complete the loading process, the cradle and the telescopic arms are required to withdraw through the row of frames by the distance necessary for continuing these loading operations, the distance from the last and outermost of these frames being less each time.

The withdrawal movements of the telescopic crane are logically carried out in the consecutive aligned arrangement intervals of the pairs of pallets.

Moreover, a device for bringing pairs of pallets closer together and grouping them is available at the actual head loading point, said device consisting of two oblique guides which meet in the direction of the platform so that mutual, gradual and simultaneous closing together of both pallets takes place.

Obviously, the general unloading process requires the same steps as the loading process although in reverse order, verifying all the locations of the pairs of front-aligned pallets so that the forks are able to turn appropriately and adapt to the minimum differences in location of the pallets deriving from displacements during their transportation and also carrying out final checking of the withdrawal of the last pair of pallets.

### DESCRIPTION OF THE DRAWINGS

To supplement the description being given and in order to facilitate better and easier understanding of the characteristics of the invention, the present specification is accompanied, as an integral part thereof, by a set of drawings which, in an illustrative and non-limiting manner, show the following:

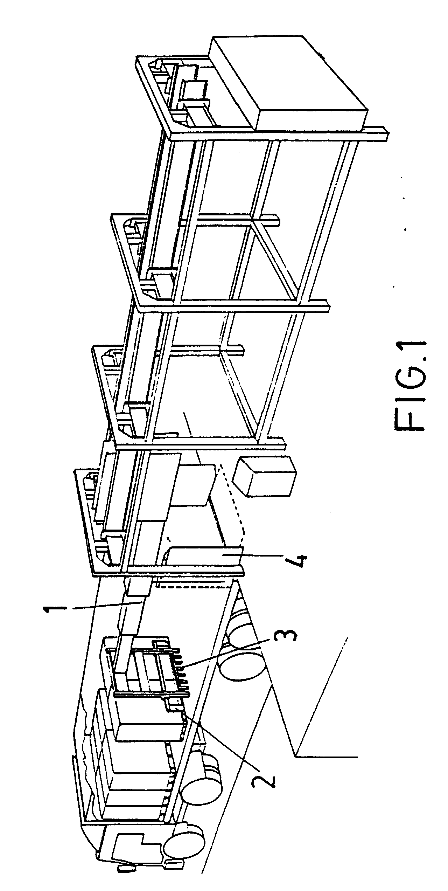

Figure 1 shows a general and diagrammatic perspective view of the loading quay, with a lorry backed up to it and in the process of automatic loading or unloading, where it is possible to see some of the improvements which are the subject of this invention;

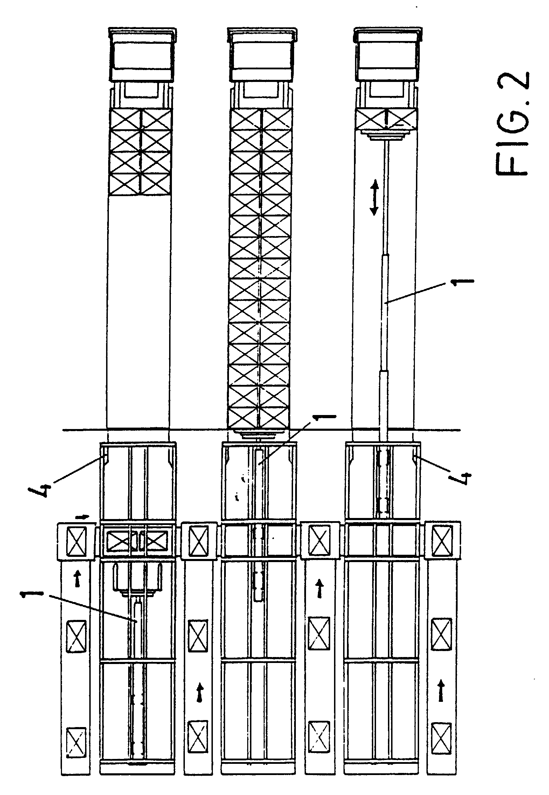

Figure 2 shows a general and, again, diagrammatic plan view of the installation which is the subject of the above-mentioned improvements, where it is possible to observe different loading arrangements of several lorries, depending on the filling level thereof, and

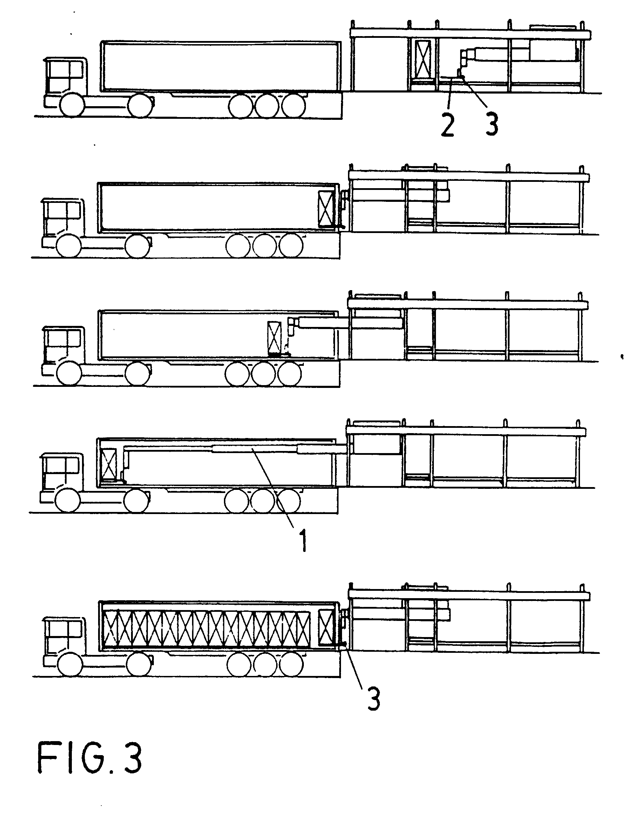

Figure 3 shows a diagrammatic elevation of the said installation, consecutively illustrating various operating aspects thereof, from top to bottom: the arrangement of the lorry for the start of loading, the cradle entering into the lorry and lowering its support wheels, the start of operation of the extendable telescopic arms, limit-of-travel contact thereof and, in the bottom arrangement, total withdrawal of the telescopic arms and final location with the cradle prior to withdrawal of the latter and retraction of the wheels for the start of a new cycle.

### PREFERRED EMBODIMENT OF THE INVENTION

From a study of the above-mentioned figures, it is possible to observe how the recommended invention for automatic loading and unloading of lorries, preferably in automated warehouses, incorporates a telescopic crane (1) which is provided with a cradle and which is aligned with the axis of the loading platform of the lorry so that it can reach the furthest point of the box body.

In addition to the telescopic device, it incorporates a system for combinable vertical and horizontal displacement of the forks (2), for handling the pallets in successive pairs and a wheel deployment/retraction device for lowering and retracting the wheels for rear support (3) of the load, which wheels rotate freely and are provided with a hydraulic or pneumatic sensor able to detect obstacles and the presence of a slope.

Once the cradle has been introduced inside the box body of the lorry together with the first row of pallets, the telescopic mechanism of the crane comes into operation, pushing the pallets as far as possible into the interior of the box body.

By means of a laser checking device, the perpendicular and height alignment of the walls and of the floor of the platform with respect to the edge of the quay are checked beforehand and, in each loading operation, the extendable telescopic arms are displaced until they come into contact with the last row of pallets set down, thus completing the loading, the cradle and the telescopic arms being withdrawn completely for this purpose.

The laser checking device also determines the correct alignment and proximity of the pallets to the walls of the lorry.

A device (4) for bringing grouped pairs of pallets closer together is incorporated at the head loading point. The device (4) comprises opposed oblique guides which connect in terms of height both with the pallet and with the load and, as the pallets are introduced onto the platform, before the carrying wheels connect with the floor, bring the pallets closer progressively on account of said oblique arrangement.

This device serves, in turn, as a fitting means at the sides of the platform of the lorry, acting as an extension of the actual quay.

This installation is also equipped with a multi-axis computerised monitoring system which is used for study and complete memory storage of the box body of the lorry, for its subsequent loading or unloading.

This description is not made more extensive since any expert in this field would have sufficient information to understand the scope of the invention and the advantages deriving from it, as well as to reproduce it.

## Claims

1. An automatic installation for loading pallets onto lorries and unloading them from lorries, especially in automatic warehouses, which comprises:
an automated feed system for delivering pallets to and retrieving pallets from a loading quay or a series of loading quays, said automated feed system being arranged on the or each loading quay in two parallel rows, one on either side of an inner extension of the plane of the sides of a lorry to be loaded or unloaded;
respective frame means mounted on the or each quay and aligned in the same direction as the loading platform of said lorry to be loaded or unloaded, said frame means incorporating a telescopic crane provided with a cradle for loading and unloading the pallets, said cradle including two rear support wheels;
a wheel deployment/retraction device operable to lower said rear support wheels when the cradle with the first row of pallets has been introduced inside the box body of the lorry;
a hydraulic or pneumatic sensor incorporated in the cradle for detecting obstacles and the presence of a slope;
a laser checking device for determining the perpendicular and height alignment of the platform of the lorry with respect to the quay and for determining the correct alignment and proximity of said pallets to the walls of the lorry during displacement of the telescopic crane inside the lorry.

## Patentansprüche

1. Automatische Einrichtung zur Ladung von Containern in Lastwägen und zur Entladung derselben von Lastwägen, insbesondere in automatischen Lagerräumen, wobei diese folgendes umfasst:
ein automatisiertes Beschickungssystem für die Übergabe von Containern und/oder die Abnahme von Containern von einer Verladerampe oder einer Reihe von Verladerampen, wobei das genannte automatische Beschickungssystem auf dem/auf den Verladerampen angeordnet ist, in zwei parallelen Reihen, auf beiden Seiten einer inneren Verlängerung der Ebene der Seitenwände eines zu beladenden oder zu entladenden Lastwagens;
das entsprechende Gestell, das auf dem/bzw. auf den Rampen montiert ist und in dieselbe Richtung ausgerichtet ist, wie die Ladebühne des genannten Lastwagens der be- bzw. entladen wird, wobei das genannte Gestell einen ausfahrbaren Kran umfasst, der einen Stützbock aufweist, um die Container zu laden und zu entladen, wobei der genannte Stützbock zwei hintere Stützräder aufweist;
eine Vorrichtung um die Räder aus-/einzufahren, die betätigt werden kann, um die genannten hinteren Stützräder auszufahren, nachdem der Stützbock mit der ersten Reihe von Containern in den Körper des Lastwagengehäuses eingeführt wurde;
ein hydraulischer bzw. pneumatischer Sensor, der in dem Stützbock eingebaut ist, um Hindernisse und das Vorhandensein einer Neigung festzustellen;
eine Laserprüfvorrichtung, um die senkrechte und höhenbezogene Ausrichtung der Lastwagenplattform festzustellen und für die Bestimmung der ordnungsgemässen Ausrichtung und der Nähe der genannten Container zu den Lastwagenwänden, während der Bewegung des ausfahrbaren Krans im Inneren des Lastwagens.

## Revendications

1. Une installation automatique pour charger des palettes sur des camions et décharger les palettes de ceux-ci, en particulier des entreposages automatiques, qui comprennent:
un système d'alimentation automatisé pour livrer des palettes et amener des palettes du quai de chargement ou d'une série de quais de chargement, le-dit système d'alimentation automatisé étant disposé sur le /chaque quai en deux rangées parallèles, une de chaque côté du prolongement intérieur du plan des côtés du camion à charger ou à décharger;
il s'entend que le respectif système s'élève sur le/chaque quai et qu'il est aligné dans la même direction que la plate-forme de chargement du-dit camion à charger ou à décharger, il s'entend que le-dit système incorpore une grue télescopique munie d'un échaffaudage volant pour charger et décharger les palettes, la-dite plate-forme comprenant deux roues d'appui arrière;
un dispositif opérable de déploiement/retrait de la roue pour abaisser les-dites roues d'appui arrière quand l'échaffaudage avec la première rangée de palettes a été introduite dans le corps du moyeu du camion;
un senseur hydraulique ou pneumatique incorporé à l'échaffaudage pour détecter des obstacles et la présence d'une pente;
un dispositif de contrôle par laser pour déterminer l'alignement perpendiculaire et en hauteur de la plate-forme du camion par rapport au quai et pour déterminer le correct alignement et la proximité des-dites palettes aux parois du camion pendant le déplacement de la grue téléscopique à l'intérieur du camion.
